(19) Europäisches Patentamt
European Patent Office
Office européen des brevets

(11) **EP 3 975 211 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **21199585.7**

(22) Anmeldetag: **28.09.2021**

(51) Internationale Patentklassifikation (IPC):
**H01F 38/18** (2006.01) **G01D 5/20** (2006.01)
**G01D 21/00** (2006.01)

(52) Gemeinsame Patentklassifikation (CPC):
**G01D 5/2013; G01D 21/00; H01F 38/18**

(54) **VEREINIGUNG VON RESOLVER UND INDUKTIVER ROTORVERSORGUNG IN EINEM MAGNETISCHEN KREIS**

UNIFICATION OF RESOLVER AND INDUCTIVE ROTOR SUPPLY IN ONE MAGNETIC CIRCUIT

UNIFICATION DE RÉSOLVEUR ET DE D'ALIMENTATION INDUCTIVE DE ROTOR DANS UN CERCLE MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2020 DE 102020212268**

(43) Veröffentlichungstag der Anmeldung:
**30.03.2022 Patentblatt 2022/13**

(73) Patentinhaber: **Universität Stuttgart**
**70174 Stuttgart (DE)**

(72) Erfinder:
• **Noeren, Jannis**
**74391 Erligheim (DE)**
• **Gneiting, Andreas**
**70327 Stuttgart (DE)**
• **Parspour, Nejila**
**70839 Gerlingen (DE)**

(74) Vertreter: **Müller-Boré & Partner**
**Patentanwälte PartG mbB**
**Friedenheimer Brücke 21**
**80639 München (DE)**

(56) Entgegenhaltungen:
**DE-A1- 19 946 934    JP-A- S62 261 922**

**Beschreibung**

Die Erfindung betrifft eine Vorrichtung zur kontaktlosen Übertragung von elektrischer Energie auf einen auf einem Rotor einer elektrischen Maschine angeordneten Verbraucher und zur Erfassung der Winkelposition des Rotors. Des Weiteren betrifft die Erfindung ein entsprechendes Verfahren sowie eine entsprechende elektrische Maschine.

Um den Rotor einer elektrischen Maschine (z.B. eines Motors oder eines Generators) mit elektrischer Energie zu versorgen, werden herkömmlicherweise Energieübertragungssysteme eingesetzt, bei denen die elektrische Energie über Schleifkontakte übertragen wird. Diese Art der Energieübertragung hat zahlreiche Nachteile, wie z.B. größere axiale Massen, höheren Wartungsaufwand, und Erwärmung. Aus dem Stand der Technik sind ebenfalls elektrische Maschinen mit kontaktloser (z.B. induktiver) Energieversorgung des Rotors bekannt.

Des Weiteren sind Resolver oder andere Rotorwinkelgeber zur Bestimmung der Winkelposition des Rotors aus dem Stand der Technik bekannt.

JP S62-261922 beschreibt einen bürstenlosen Resolver mit sich auf dem Rotor befindlichen Wicklungen zur Erzeugung des notwendigen Wechselfeldes.

DE 10 2007 014 661 A1 beschreibt eine Lenkeinrichtung für ein Kraftfahrzeug mit einem einen drehfest mit dem Fahrzeug verbundenen Stator und einen drehfest mit dem Lenkrad verbundenen Rotor aufweisenden induktiven Modul zur berührungslosen Übertragung von elektrischer Energie und Daten zwischen dem Fahrzeug und dem Lenkrad, zur Erfassung des Drehwinkels des Lenkrades sowie zur Erzeugung von

Drehmomenten zwischen dem Fahrzeug und dem Lenkrad.

DE 199 46 934 A1 offenbart ein Lenkradmodul, das drei Funktionsgruppen, nämlich eine Energieübertragung, eine Informationsübertragung und eine Winkelsensorik, in einem kompakten zweiteiligen Bauteil vereinigt.

Bisher wurden die beiden Funktionalitäten (Resolver bzw. Winkelpositionsmessung und kontaktlose Energieübertragung) getrennt implementiert: Resolver oder andere Rotorwinkelgeber einerseits und kontaktlose Rotorversorgung oder andere Versorgung andererseits. Folglich wurde mehr Bauraum benötigt und die Komplexität und somit Kosten der elektrischen Synchronmaschine erhöht.

Aufgabe der vorliegenden Erfindung ist es, die oben genannten Nachteile zumindest teilweise zu überwinden und eine vorteilhafte Weiterbildung einer Vorrichtung mit einer Energieübertragungsfunktion und einer Winkelpositionsmessfunktion bereitzustellen. Diese Aufgabe wird durch die Gegenstände der unabhängigen Ansprüche gelöst. Bevorzugte Ausführungsformen sind Gegenstand der Unteransprüche.

Die Erfindung schlägt vor, die Erfassung des Rotorwinkels bzw. der Winkelposition des Rotors (Resolver bzw. Resolverfunktion) und die kontaktlose bzw. bürstenlose Versorgung des Rotors mit elektrischer Energie zu vereinen.

Ein erster Aspekt der Erfindung betrifft eine Vorrichtung zur induktiven Übertragung von elektrischer Energie auf einen auf einem Rotor einer elektrischen Maschine angeordneten elektrischen Verbraucher und zur Erfassung der Winkelposition des Rotors mit den im Anspruch 1 angegebenen Merkmalen.

Ein zweiter Aspekt der Erfindung betrifft eine elektrische Maschine umfassend:

> einen Rotor;
> einen Stator; und
> eine Vorrichtung zur induktiven Übertragung von elektrischer Energie auf einen auf dem Rotor angeordneten elektrischen Verbraucher und zur Erfassung der Winkelposition des Rotors gemäß dem ersten Aspekt,
> wobei die zumindest eine Primärspule statorseitig und die zumindest eine Sekundärspule rotorseitig angebracht sind.

Ein weiterer Aspekt der Erfindung betrifft ein Verfahren zur kontaktlosen Energieübertragung auf einen auf einem Rotor einer elektrischen Maschine angeordneten elektrischen Verbraucher und zur Erfassung der Winkelposition des Rotors umfassend:

> Bereitstellen der elektrischen Maschine gemäß dem zweiten Aspekt mit dem Rotor und dem auf dem Rotor angeordneten elektrischen Verbraucher; und
> kontaktlose Energieübertragung auf den auf dem Rotor angeordneten elektrischen Verbraucher und Erfassung der Winkelposition des Rotors mittels der bereitgestellten Vorrichtung.

Die vorliegende Erfindung ermöglicht die Rotorwinkelbestimmung einer elektrischen Maschine und eine gleichzeitige induktive kontaktlose Versorgung eines elektrischen Verbrauchers auf dem Rotor, wie z.B. einer Rotorwicklung bzw. Erregerwicklung des Rotors, eines Sensors, etc.. Anders ausgedrückt finden die Energieübertragung und die Erfassung der Winkelposition des Rotors (Resolverfunktion) vorzugsweise gleichzeitig statt. Dadurch wird weniger Bauraum benötigt und die Komplexität des Gesamtsystems reduziert. Dies führt zu einer Reduktion der Kosten. Gegenüber herkömmlichen Rotorversorgungen mit Bürsten arbeitet die vorgeschlagene Vorrichtung verschleißfrei. Dies führt zu einer weiteren Reduktion der Kosten.

Der Begriff "elektrische Maschine" bezieht sich dabei sowohl auf elektrische Motoren als auch auf elektrische Generatoren. Die elektrische Maschine kann eine beliebige rotierende Maschine sein, wie z.B. eine Synchronmaschine, Asynchronmaschine, etc. sein.

Die erfindungsgemässe Vorrichtung zur induktiven Übertragung von elektrischer Energie auf einen auf einem Rotor einer elektrischen Maschine angeordneten elektrischen Verbraucher und zur Erfassung der Winkelposition des Rotors ist in Anspruch 1 definiert.

Die induktive Energieübertragungsstrecke (IPT "**I**nductive **P**ower **T**ransfer") Strecke kann eine an sich bekannte IPT Strecke sein. Die induktive Energieübertragungsstrecke umfasst einen Energiesender mit zumindest einer ersten Spule (Energiesenderspule oder Primärspule) und einen Energieempfänger mit zumindest einer zweiten Spule (Energieempfängerspule oder Sekundärspule), wobei die Energieübertragung mittels Induktion von der zumindest einen ersten Spule (Primärspule) auf die zumindest eine zweite Spule (Sekundärspule) erfolgt. Insbesondere wird zur induktiven Energieübertragung im Sender mittels eines Oszillators, der als Wechselrichter arbeitet, ein magnetisches Wechselfeld erzeugt. Die Sekundärspule wird durch die Primärspule mit dem magnetischen Wechselfeld durchgesetzt, das eine Wechselspannung in der Sekundärspule induziert. Die Wechselspannung kann gleichgerichtet zur Versorgung eines elektrischen Verbrauchers verwendet werden. Bei einer induktiven Energieübertragungsstrecke zur induktiven Übertragung elektrischer Energie auf einen Verbraucher auf dem Rotor einer elektrischen Maschine ist die zumindest eine erste Spule (Primärspule) statorseitig (z.B. in/auf dem Stator, oder mit dem Stator (fest) verbunden) angeordnet. Die zumindest eine zweite Spule (Sekundärspule) ist rotorseitig (z.B. in/auf dem Rotor, oder mit dem Rotor (fest) verbunden) angeordnet.

Ein Resolver ist ein elektromagnetischer Messumformer zur Wandlung der Winkelposition eines rotierenden Objekts (wie z.B. eines Rotors) in eine elektrische Größe, welche mittels geeigneter Messvorrichtung gemessen wird. Der Resolver umfasst zumindest eine Signalempfängerspule bzw. Messspule, welche zur Messung der Winkelposition des Rotors verwendet wird.

Die zumindest eine Signalempfängerspule bzw. Messspule des Resolvers ist zugleich die zumindest eine Energiesenderspule (Primärspule) der induktiven Energieübertragungsstrecke. Die zumindest eine Primärspule weist somit sowohl eine Energieübertragungsfunktion als auch eine Winkelpositionsmessfunktion auf. Dabei kann, wie nachfolgend im Detail beschrieben, eine im Wesentlichen gleichbleibende Anregung der zumindest einen Primärspule stattfinden. Die Energieübertragungsfunktion und die Winkelpositionsmessfunktion werden folglich nicht zeitversetzt (zum Beispiel mittels einer entsprechenden zeitversetzten Anregung der zumindest einen Primärspule) sondern gleichzeigt realisiert.

Dementsprechend umfasst der magnetische Kreis zumindest eine (statorseitige bzw. in/auf dem Stator angeordnete oder mit dem Stator (fest) verbundene) Primärspule und zumindest eine (rotorseitige bzw. in/auf dem Rotor angeordnete oder mit dem Rotor (fest) verbundene) Sekundärspule, wobei die Primärspule sowohl zur Messung der Winkelposition des Rotors bzw. des Drehwinkels als auch zur induktiven Übertragung elektrischer Energie auf einen Verbraucher auf dem Rotor eingesetzt wird bzw. ausgebildet ist. Anders ausgedrückt ist die Primärspule Bestandteil sowohl des Resolvers als auch der induktiven Energieübertragungsstrecke. Vorzugsweise umfasst der magnetische Kreis eine Mehrzahl von Primärspulen, wie z.B. 2, 3, 4, 5 oder eine höhere Anzahl von Primärspulen. Die zu erfassende Winkelposition kann z.B. anhand von zwei Primärspulen exakt bestimmt werden. Zur Verbesserung der Zuverlässigkeit und Genauigkeit des Resolvers und Erhörung der Leistungsfähigkeit der Energieübertragung können weitere Primärspulen verwendet werden. Die Anzahl an Primärspulen und/oder deren Anordnung hängt von der Auslegung der elektrischen Maschine und/oder der Gesamtauslegung der Winkelmessung (z.B. des zu messenden Winkelbereichs, etc.) ab. Die Anordnung der Primärspulen ist vorzugsweise so zu wählen, dass die Primärspulen nicht permanent bzw. dauerhaft redundanten Informationen liefern. Die Anordnung der Primärspulen kann beispielsweise nicht achsensymmetrisch sein, um zu vermeiden, dass gegenüberliegende Spulen dieselbe Information liefern.

Die zumindest eine Primärspule kann z.B. als eine U-Kern-Spule ausgebildet werden.

Die zumindest eine Primärspule weist zumindest eine von der Winkelposition des Rotors abhängige elektrische Eigenschaft auf. Die elektrische Eigenschaft ist insbesondere die Induktivität der Primärspule. Anhand der winkelabhängigen elektrischen Eigenschaft (wie Induktivität) der zumindest eine Primärspule kann die Winkelposition des Rotors ermittelt werden.

Damit die zumindest eine elektrische Eigenschaft (wie die Induktivität) der Primärspule sich abhängig von der Winkelposition des Rotors ändert, umfasst der Resolver eine Anordnung, welche ausgelegt ist, bei einer Drehung des Rotors die Induktivität der Primärspule zu ändern. Die Anordnung umfasst zumindest einen Magnetring aus einem magnetischen Material, welcher sich mit dem Rotor mitdreht. Der Magnetring kann z.B. ringförmig um die Drehachse des Rotors (Rotorachse) herum angeordnet sein. Der Magnetring ist derart ausbildet und angeordnet, dass sich bei einer Drehung des Rotors die Induktivität der zumindest einen Primärspule in Abhängigkeit von der Winkelposition des Rotors ändert. Die Induktivität der zumindest einen Primärspule ist somit eine Funktion der Winkelposition des Magnetrings und somit des Rotors.

Insbesondere werden bei einer Drehung des Rotors und des sich mit dem Rotor drehenden Magnetrings unterschiedliche Bereiche des Magnetrings nacheinander in eine der jeweiligen Primärspule gegenüberliegende Position gebracht. Das magnetische Material des der jeweiligen Primärspule gegenüberliegenden Bereichs des Magnetrings (d.h. des Bereichs, welcher sich bei einer bestimmten Winkelposition des Rotors in der (unmittelbare) Umgebung der Primärspule befindet) beeinflusst die Induktivität der jeweiligen Primärspule. Durch eine winkelabhängige Änderung der Menge, Form und/oder der Anordnung des magnetischen Materials in der unmittelbare Umgebung der Primärspule kann somit eine winkelabhängige Änderung der Induktivität der Primärspule erzielt werden, die zur Messung der Winkelposition des Magnetrings und somit des Rotors verwendet werden kann.

Der Magnetring kann als ein kontinuierlicher (durchgehender bzw. massiver) Ring aus magnetischem Material ausgebildet sein. Alternativ kann der Magnetring eine Vielzahl von diskreten magnetischen Elementen bzw. Magnetkernen (z.B. Ferritkernen) umfassen, welche ringförmig angeordnet sind. Die Anordnung kann mehrere Magnetringe umfassen, die z.B. konzentrisch zueinander angeordnet sind.

Um eine winkelabhängige Änderung der Induktivität der zumindest einen Primärspule zu erzielen, können unterschiedliche Eigenschaften des Magnetrings, wie z.B. dessen Form, Querschnitt (Dicke und/oder Breite), und/oder Anordnung geeignet gewählt werden.

Der Magnetring kann beispielsweise derart ausgebildet und angeordnet sein, dass die diskreten Magnetkerne bzw. die unterschiedlichen Bereiche des kontinuierlichen Magnetrings in unterschiedlichen bzw. variierenden Abständen zur Drehasche des Rotors (Rotorachse) angeordnet sind und/oder unterschiedlichen Formen (z.B. unterschiedlichen Dicken und/oder Breiten und/oder Längen) aufweisen. Durch die unterschiedlichen bzw. variierenden Abstände der diskreten Magnetkerne bzw. der unterschiedlichen Bereiche des kontinuierlichen Magnetrings zur Rotorachse und/oder durch die Variation des magnetischen Materials wird die Winkelposition des Rotors kodiert.

Die Form des Magnetrings kann eine beliebige Form sein, welche geeignet ist, die Induktivität der zumindest einer Primärspule bei einer Drehung zu verändern. Beispielsweise kann die Form des Magnetrings im Wesentlichen elliptisch sein. Diese Anordnung ist für eine Winkelmessung in einem 180°-Fenster geeignet. Für eine Winkelmessung in einem 90°-Fenster ist z.B. eine im Wesentlichen schmetterlings- bzw. rautenförmige Form mit vier Ausformung nach außen möglich. Andere nicht kreisrunde Formen, wie z.B. im Wesentlichen dreieckige, quadratische, rechteckige, etc. Formen sind ebenfalls möglich.

Der Magnetring kann zentriert (d.h. der Mittelpunkt des Magnetrings liegt auf der Drehachse des Rotors) oder exzentrisch zur Drehachse des Rotors (d.h. der Mittelpunkt des Magnetrings liegt nicht auf der Drehachse des Rotors) angeordnet sein. Bei einem exzentrisch angeordneten Magnetring kann der Magnetring auch kreisrund und mit einem konstanten Querschnitt (d.h. mit einer konstanten Dicke und einer konstanten Breite) sein. Andere Formen sind ebenfalls möglich.

Wie oben beschrieben werden bei einer Rotation des Rotors die diskreten Magnetkerne bzw. die unterschiedlichen Bereiche oder Punkte eines durchgehenden Magnetrings nacheinander in eine der zumindest einen Primärspule auf dem Stator gegenüber liegende Position gebracht.

Die Induktivität der Primärspule ist abhängig vom Abstand zwischen dem Magnetkern oder dem Bereich des durchgehenden Magnetrings, welcher der Primärspule gegenüber liegt, und der zumindest einen Wicklung der Primärspule. Ist dieser Abstand gering weist die Primärspule eine hohe Induktivität auf. Ist dieser Abstand groß weist die Primärspule eine geringe Induktivität auf. Bei einer nicht kreisrunden Form des Magnetrings und/oder einer exzentrischen Anordnung des Magnetrings zur Drehachse des Rotors ändert sich dieser Abstand mit der Drehung des Rotors, d.h. mit der Änderung der Winkelposition des Rotors. Die zumindest eine Primärspule weist folglich eine mit der Drehung des Rotors variierende Induktivität auf, welche von der Winkelposition des Rotors abhängt.

Die Induktivität der Primärspule ist ferner abhängig von der Menge des magnetischen Materials des Magnetkerns oder des Bereichs des durchgehenden Magnetrings, welcher der Primärspule gegenüber liegt. Bei einem Magnetring mit einer winkelabhängig variierenden Querschnittsform (z.B. mit einer winkelabhängig variierenden Dicke und/oder einer winkelabhängig variierenden Breite des magnetischen Materials bzw. der diskreten Magnetkerne) ändert sich bei einer Rotation des Rotors diese Menge, was ebenfalls zu einer winkelabhängigen Änderung der Induktivität der Primärspule führt.

Der zumindest eine kontinuierliche Magnetring kann aus einem beliebigen magnetischen Vollmaterial gefertigt werden, z.B. aus in Form gepresstem Ferrit oder magnetischem Kunststoff, z.B. im Spritzgussverfahren. Die diskreten Magnetkerne, welche den zumindest einen Magnetring bilden, können ebenfalls aus einem beliebigen magnetischen Material gefertigt werden, z.B. aus Ferrit. Der zumindest eine Magnetring kann auf bzw. in einem Träger aus einem nicht magnetischen Material (wie z.B. Kunststoff) angeordnet bzw. angebracht werden. Der Träger kann Bestandteil des Rotors sein oder mit dem Rotor (fest) verbunden sein.

Bei einem Magnetring aus diskreten Magnetkernen kann die Anzahl der diskreten Magnetkerne abhängig von der Anwendung (z.B. der gewünschten Winkelauflösung) und/oder Abmessungen der Massanordung variieren. Die Form der diskreten Magnetkerne kann geeignet gewählt werden. Beispielsweise kann jeder der diskreten Magnetkerne eine im Wesentlichen zylindrische Form mit einem kreisrunden, elliptischen, quadratischen, rechteckigen, etc. Querschnitt aufweisen.

Die zumindest eine Primärspule ist elektrisch mit einem Oszillator verbunden bzw. Teil eines Oszillators. Bei mehreren Primärspulen kann jede der Primärspulen jeweils mit einem Oszillator elektrisch verbunden sein. Wie oben beschrieben, erzeugt der Oszillator in der zumindest einen Primärspule einen Wechselstrom. Das durch die Primärspule erzeugte Wechselfeld durchdringt die zumindest eine Sekundärspule und induziert in dieser eine Wechselspannung. Die induzierte Wechselspannung kann, z.B. gleichgerichtet, zur Versorgung des Rotors bzw. eines elektrischen Verbrauchers auf dem Rotor verwendet werden.

Die Resonanzfrequenz des Oszillators ist von der Induktivität der zumindest einen Primärspule abhängig. Ändert sich die Induktivität der jeweiligen Primärspule, ändert sich auch die Resonanzfrequenz des entsprechenden Oszillators. Wie oben beschrieben, variiert die Induktivität der Primärspule und hängt von der Winkelposition des Rotors ab. Folglich kann aus der gemessenen Resonanzfrequenz des Oszillators die Induktivität der Primärspule und somit die Winkelposition des Rotors bestimmt werden. Die Resonanzfrequenz des Oszillators wird mit einem geeigneten Frequenzmesser gemessen, welcher Bestandteil einer Induktivitätsmessvorrichtung sein kann. Der Frequenzmesser kann z.B. eine feldprogrammierbare Logik (FPGA) umfassen. Der Frequenzmesser kann ferner ein Tiefpassfilter umfassen.

Der Oszillator kann z.B. ein Royer-Oszillator sein. Der Royer-Oszillator umfasst einen zur Primärspule parallel geschalteten Kondensator, der zusammen mit der Induktivität der Primärspule einen Parallelschwingkreis bildet, wobei der Parallelschwingkreis im Wesentlichen im Resonanzpunkt arbeitet.

Es sind auch Konfigurationen möglich, bei dem der Oszillator einen zur Primärspule in Reihe geschalteten Kondensator umfasst. Eine Kombination von parallel und in Reihe geschalteten Kondensatoren ist ebenfalls möglich.

Die Energieübertragungsstrecke kann ferner einen Kompensator umfassen, welcher ausgebildet ist, eine Abhängigkeit der induzierten Spannung (d.h. der sekundärseitigen Ausgangsspannung bzw. der in der zumindest einen Sekundärspule induzierten Spannung) vom entnommenen Strom zumindest in einem vorgegebenen Betriebsbereich im Wesentlichen zu kompensieren. Dadurch wird die sekundäre Ausgangsspannung in dem vorgegebenen Betriebsbereich unabhängig von der Stromentnahme.

Ferner kann die Energieübertragungsstrecke einen Gleichrichter umfassen, welcher der Kompensator nachgeschaltet sein kann.

Ferner kann die Vorrichtung ein Tiefpassfilter umfassen, z.B. als Bestandteil des Resolvers und insbesondere des Frequenzmessers. Mit dem Tiefpassfilter kann das Messsignal, anhand dessen die Winkelposition des Rotors ermittelt wird, geglättet werden, um mögliche Störungen zu entfernen. Die Grenzfrequenz des Tiefpassfilters kann je nach Anwendung und Auslegung des Messystems, z.B. im Bereich von wenigen Herz bis mehreren Zehn kHz (d.h. im Bereich von ungefähr 1 Hz bis ungefähr 100 kHz), vorzugsweise im Bereich von wenigen kHz liegen. Die Grenzfrequenz des Tiefpassfilters kann zum Beispiel im Bereich von ungefähr 1 Hz bis ungefähr 100 kHz, von ungefähr 100 Hz bis ungefähr 80 kHz, von ungefähr 1 kHz bis ungefähr 50 kHz liegen. Die Grenzfrequenz des Tiefpassfilters kann insbesondere so gewählt werden, dass diese weit über der höchstens zu erwartenden Rotordrehzahl liegt

Der Rotor kann ein Innenrotor (Innenläufer) sein, d.h. ein Rotor, der vom Stator umgeben wird. Eine Anordnung mit einem Außenrotor (Außenläufer), welcher den Stator der elektrischen Maschine umgibt, ist ebenfalls möglich.

Nachfolgend werden bevorzugte Ausführungsformen der vorliegenden Erfindung anhand begleitender Figuren beispielhaft beschrieben. Einzelelemente der beschriebenen Ausführungsformen sind nicht auf die jeweilige Ausführungsform beschränkt. Vielmehr können Elemente der Ausführungsformen beliebig miteinander kombiniert werden und neue Ausführungsformen dadurch erstellt werden. Es zeigt:

**Figur 1** eine schematische Ansicht von oben des magnetischen Kreises eines beispielhaften Resolvers für eine elektrische Maschine;

**Figuren 2A** und **2B** jeweils eine Schnittansicht des magnetischen Kreises aus Figur 1;

**Figur 3** eine schematische Ansicht von oben des magnetischen Kreises aus Figur 1 bei einer Drehung des Rotors um 30° gegenüber der in Figur 1 gezeigten Rotorposition;

**Figur 4** den Induktivitätsverlauf der Primärspulen des magnetischen Kreises aus Figur 1 als Funktion des Rotationswinkels des Rotors über eine 360°-Drehung des Rotors;

**Figur 5A** eine schematische Ansicht von oben des magnetischen Kreises einer beispielhaften Vorrichtung zur kontaktlosen Energieübertragung auf einen Rotor einer elektrischen Maschine und zur Erfassung der Winkelposition des Rotors;

**Figur 5B** eine perspektivische Ansicht einer beispielhaften Vorrichtung zur kontaktlosen Energieübertragung auf einen Rotor einer elektrischen Maschine und zur Erfassung der Winkelposition des Rotors;

**Figur 5C** eine Ansicht von oben der in Figur 5B gezeigten beispielhaften Vorrichtung mit vereinten Resolverfunktion und kontaktloser Energieübertragungsfunktion auf den Rotor;

**Figuren 6A** und **6B** jeweils eine Schnittansicht des magnetischen Kreises aus Figur 5A;

**Figur 7** eine Schnittansicht eines magnetischen Kreises einer beispielhaften Vorrichtung zur kontaktlosen Energieübertragung auf einen Rotor einer elektrischen Maschine und zur Erfassung der Winkelposition des Rotors;

**Figur 8** ein Blockschaltbild einer beispielhaften Vorrichtung zur kontaktlosen Energieübertragung auf einen Rotor einer elektrischen Maschine und zur Erfassung der Winkelposition des Rotors;

**Figur 9** den Spannungsverlauf der primärseitigen Spulenspannung als Funktion der Zeit;

**Figuren 10A** bis **10F** jeweils beispielhafte Ausführungen eines Magnetrings; und

**Figur 11A** und **11B** beispielhafte elektrische Maschinen mit einem Innenrotor.

Funktionsweise des Resolvers

Aufgabe eines Resolvers ist die Erfassung der Winkelposition eines rotierenden Objekts, wie z.B. des Rotors einer elektrischen Maschine. Dabei soll der Resolver eine eindeutige Winkelbestimmung innerhalb eines gegebenen Winkelbereichs ermöglichen. Dieser Winkelbereich kann eine vollständige Umdrehung (360°) oder ein ganzzahliger Teil ($\frac{1}{n}$, $n \in \mathbb{N}$) der vollständigen Umdrehung sein (wie z.B. 180°, 120°, ...). Wie groß der Winkelbereich sein muss, ist von der Polpaarzahl der verwendeten elektrischen Maschine abhängig. Beispielsweise kann der Resolver auf eine Anwendung mit zwei Polpaaren ausgelegt werden. In diesem Fall soll der Rotationswinkel in einem Winkelbereich von 180° eindeutig bestimmt werden können.

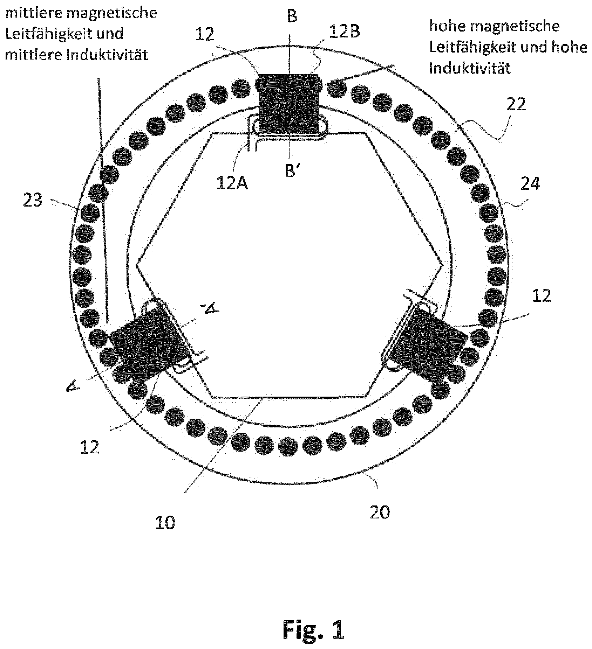

**Figur 1** zeigt eine schematische Darstellung des magnetischen Kreises eines Resolvers einer beispielhaften erfindungsgemässen Vorrichtung zur induktiven Energieübertragung auf einen auf dem Rotor einer elektrischen Maschine angeordneten Verbraucher und zur Erfassung der Winkelposition des Rotors. Die elektrische Maschine kann eine beliebige elektrische Maschine sein, z.B. eine Synchronmaschine.

Die elektrische Maschine weist einen Stator (auch Ständer genannt) 10 und einen Rotor (auch Läufer genannt) 20 auf. In dem in Fig. 1 gezeigten Beispiel ist der Rotor ein Außenrotor.

Im inneren Bereich befindet sich der Stator 10 mit drei befestigten Spulen 12. Wie nachfolgend beschrieben wird, dienen die Spulen 12 sowohl der Messung der Winkelposition des Rotors (d.h. des Rotationswinkels des Rotors) als auch der kontaktlosen Energieübertragung auf den Rotor. Die Spulen 12 werden im Rahmen der vorliegenden Anmeldung als Primärspulen bezeichnet. Die Primärspulen 12 sind bei dem in Figur 1 gezeigten Beispiel als U-Kern-Spulen ausgeführt. Jede der Primärspulen 12 umfasst zumindest eine Wicklung 12A aus einem elektrischen Leiter und einen C-förmigen Magnetkern 12B (z.B. einen Ferritkern). In der Figur 1 werden die Primärspulen von oben betrachtet. Die Anzahl der Primärspulen 12 ist nicht auf 3 beschränkt und kann z.B. 2, 4, 5, etc. sein. Der Stator 10 ist von dem Rotor 20 umgeben, wobei sich zwischen dem Stator 10 und dem Rotor 20 ein Luftspalt befindet.

Der Luftspalt kann eine im Wesentlichen konstante Dicke aufweisen. Der Rotor 20 weist einen Träger 22 in Form eines Rings aus nichtmagnetischem Material wie Kunststoff auf, welcher den Stator 10 umgibt. Die Rotationsachse des Trägers 22 fällt mit der Drehachse des Rotors (Rotorachse) zusammen. Der Träger 22 kann auch ein separates Bauteil sein, welches mit dem Rotor 20 fest verbunden ist und sich mit dem Rotor mitdreht.

Ferner ist im ringförmigen Träger 22 eine Vielzahl von Ferritkernen 24 über den Umfang des Trägers 22 verteilt angeordnet bzw. angebracht, wobei die Abstände der Ferritkernen 24 zur Rotationsachse des ringförmigen Trägers 22 bzw. zur Drehachse des Rotors 20 unterschiedlich sind. Die Ferritkerne (beispielhafte Magnetkerne) bilden einen Magnetring 23.

Bei dem in Figur 1 gezeigten Beispiel sind die Ferritkerne 24 in Form einer Ellipse abgeordnet bzw. eingebracht. Anders ausgedrückt weist der aus den Ferritkernen 24 gebildete Magnetring 23 eine elliptische Form auf. Die Drehachse des Rotors schneidet die Ellipse in deren Mittelpunkt (d.h. in der Mitte zwischen den Brennpunkten der Ellipse). Andere Anordnungen der Ellipse (wie z.B. versetzt zur Drehachse) sowie andere Formen des Magnetrings 23 sind ebenfalls möglich. Die einzelnen Ferritkerne 24 weisen jeweils eine zylindrische Form mit einem runden Querschnitt auf. Andere Formen der Ferritkerne 24, wie z.B. Ferritkerne mit einem elliptischen, quadratischen, rechteckigen, etc. Querschnitt, sind ebenfalls möglich. Ebenfalls ist es möglich, anstelle von Ferritkernen andere geeignete Magnetkerne einzusetzen, wie z.B. aus ferromagnetischen Metalllegierungen oder aus anderen weichmagnetischen Werkstoffen.

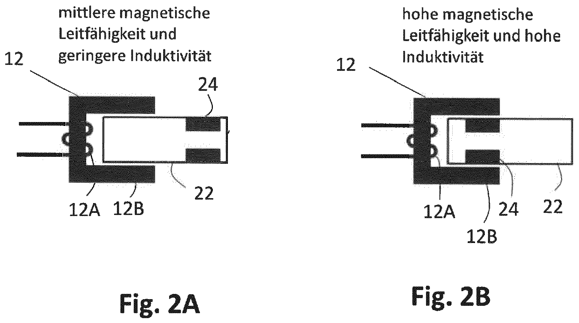

Bei einer Drehung des Rotors 10 werden die Ferritkerne 24 nacheinander in einer der jeweiligen Primärspule 12 auf dem Stator 10 gegenüberliegenden Position gebracht. Die Induktivität der jeweiligen Primärspule 12 ist abhängig vom Abstand zwischen dem Magnetkern, welcher der Primärspule 12 gegenüber liegt, und der zumindest einen Wicklung 12A der entsprechenden Primärspule 12. Bedingt durch die Verteilung der Ferritkerne im Träger 22 (z.B. in Form einer Ellipse) bzw. der Form des Magnetrings 23 ändert sich dieser Abstand bei einer Drehung des Rotors 10, wie in Figuren 2A und 2B gezeigt. Anders ausgedrückt variiert der Abstand zwischen der zumindest einen Wicklung 12A einer Primärspule 12 und dem dieser Primärspule 12 gegenüberliegenden Ferritkern 24 bei einer Drehung des Rotors 20. Daher weisen die Primärspulen 12 jeweils eine sich mit der Drehung des Rotors ändernde bzw. variable Induktivität auf, welche vom Rotationswinkel des Rotors 10 abhängt.

**Figuren 2A** und **2B** zeigen jeweils eine Schnittansicht des magnetischen Kreises aus Figur 1, wobei Figur 2A eine Schnittansicht entlang der Linie A-A' und Figur 2B eine Schnittansicht entlang der Linie B-B' zeigt. Wie in Figur 2B gezeigt, weisen die Bereiche, in denen die Ferritkerne 24 weit in die jeweilige Primärspule 12 eintauchen können (d.h. in denen der Abstand zwischen einem Ferritkern 24 und der Wicklung 12A der jeweiligen dem Ferritkern gegenüber liegenden Primärspule 12 gering ist) eine hohe Induktivität auf. Umgekehrt ergibt sich in den Bereichen, in denen sich die Ferritkerne 24 außerhalb der jeweiligen Primärspule 12 befinden (d.h. in denen der Abstand zwischen einem Ferritkern 24 und der Wicklung 12A der jeweiligen dem Ferritkern gegenüberliegenden Primärspule 12 größer ist) eine geringere Induktivität auf, wie in Figur 2A gezeigt.

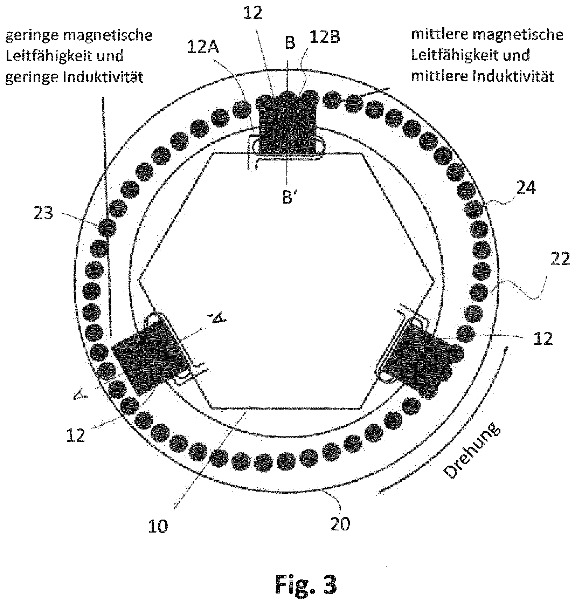

Wie oben beschrieben, ergibt sich durch die Änderung der Ferritkernabstände bei einer Drehung des Rotors 20 eine Änderung der Primärspuleninduktivitäten. Dies ist beispielhaft in **Figur 3** dargestellt. Hier ist der Rotor 20 um 30° gegen den Uhrzeigersinn gegenüber der in Figur 1 gezeigten Position gedreht.

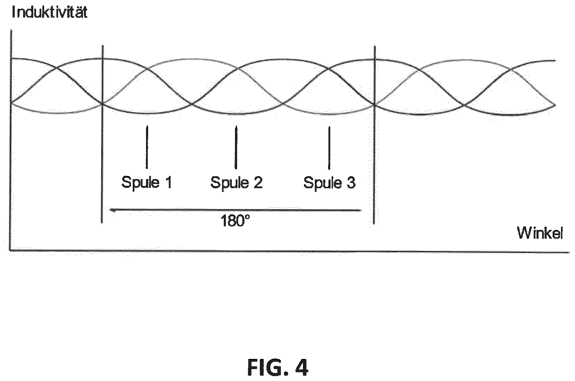

**Figur 4** veranschaulicht den qualitativen Verlauf der drei Induktivitätswerte der Primärspulen 12 über eine ganze 360°-Drehung des Rotors. Auf der Abszisse des in Figur 4 gezeigten Diagramms ist der Rotationswinkel des Rotors und auf der Ordinate die Induktivität der drei Primärspulen (Spule 1, Spule 2, Spule 3) aufgetragen. Wie aus Figur 4 ersichtlich, lässt sich bei einem Stator 10 mit drei Primärspulen 12 die Rotorposition innerhalb des gegebenen Winkelbereichs von 180° eindeutig bestimmen. Wird eine eher ungünstige Konstellation von Spulen (wie z.B. vier Spulen) verwendet, sind die Induktivitätsverläufe der gegenüberliegenden Spulen deckungsgleich. Es stehen folglich nur noch zwei unabhängige Frequenzsignale zur Verfügung. Eine eindeutige Zuordnung im gesamten Winkelbereich ist in diesem Fall nicht mehr möglich.

Der Stator 10 kann ferner Dreiphasenwicklungen (nicht gezeigt) zur Ausbildung eines magnetischen Drehfelds zum Antrieb der elektrischen Maschine in Zusammenwirkung mit einer auf dem Rotor 20 ausgebildeten Erregerwicklung (Rotorwicklung, nicht gezeigt) oder mit einem auf dem Rotor angeordneten Permanentmagneten (nicht gezeigt) umfassen.

Funktionsweise der induktiven Energieübertragung und Induktivitätsmessung

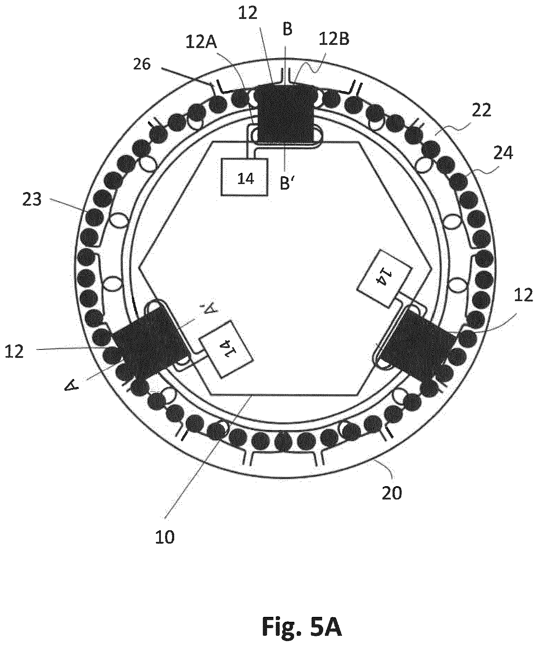

**Figur 5A** zeigt eine schematische Ansicht von oben des magnetischen Kreises einer beispielhaften Vorrichtung, bei der die Resolverfunktion und die kontaktlose Energieübertragungsfunktion vereint sind. Der Aufbau ist ähnlich dem in Figur 1 gezeigten Aufbau, wobei zusätzlich eine IPT Strecke zur Realisierung der induktiven Energieübertragung auf einem auf dem Rotor angeordneten Verbraucher vorgesehen ist. Die IPT Strecke und der Resolver sind im gleichen magnetischen Kreis kombiniert.

Insbesondere befindet sich im inneren Bereich ein Stator 10 mit drei Primärspulen 12. Die Primärspulen 12 sind als U-Kern Spulen mit einem Leiter 12A und einem Magnetkern (z.B. Ferritkern) 12B.

Der Stator 10 ist von einem Rotor 20 umgeben. Der Rotor 20 weist einen ringförmigen Träger 22 aus nichtmagnetischem Material wie Kunststoff auf, welcher den Stator 10 umgibt. Ferner weist der Rotor 10 eine Vielzahl von Ferritkernen 24 auf, welche über den Umfang eines sich mit dem Rotor 10 drehenden Trägers 22 aus einem nicht magnetischen Material, z.B. in Form einer Ellipse, verteilt angeordnet bzw. angebracht sind. Wie in Zusammenhang mit Fig. 1 beschrieben bilden die Ferritkernen 24 einen Magnetring 23.

Zur Realisierung der induktiven Energieübertragung auf einen auf dem Rotor angeordneten Verbraucher sind im Rotor 20 bzw. im Träger 22 eine Vielzahl von Sekundärspulen 26 angeordnet bzw. eingebracht. Die Sekundärspulen können z.B. ring- bzw. kreisförmig um die Drehachse des Rotors 20 bzw. des Trägers 22 angeordnet sein. Bei dem in Figur 5A gezeigten Beispiel ist die Anzahl der zusätzlichen Sekundärspulen 17. Eine geringere oder höhere Anzahl von Sekundärspulen ist ebenfalls möglich. Die Anzahl der Sekundärspulen kann mindestens so hoch gewählt werden, dass diese sich nicht gegenseitig beeinflussen. Um bei der Energieübertragung einen hohen Wirkungsgrad zu erreichen, kann es vorteilhaft sein, die Anzahl der Sekundärspulen nicht zu hoch zu wählen. Eine optimale Auslegung kann z.B. eine etwas geringere Anzahl an Sekundärspulen als 17 aufweisen.

Zusätzlich sind die Primärspulen 12 mit je einem Oszillator 14 elektrisch verbunden bzw. bilden zusammen mit weiteren Elementen einen Oszillator. Der Oszillator 14 erzeugt in der jeweiligen Primärspule 12 einen Wechselstrom, der ein magnetisches Wechselfeld erzeugt. Die äußeren Spulen im Rotor (d.h. die Sekundärspulen 26) werden mit dem magnetischen Wechselfeld durchsetzt, das eine Wechselspannung in den Sekundärspulen 26 induziert. Die induzierte Spannung kann gleichgerichtet zur elektrischen Versorgung eines auf dem Rotor 20 angeordneten Verbrauchers, wie z.B. der Rotorwicklung oder eines auf dem Rotor 20 angeordneten Sensors, verwendet werden.

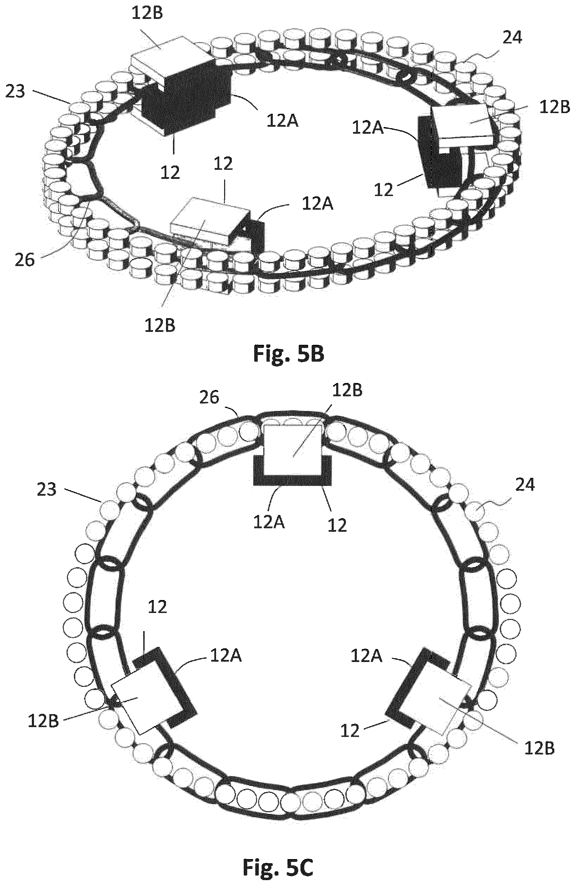

**Figur 5B** zeigt eine perspektivische Ansicht und **Figur 5C** eine Ansicht von oben der Ferritkernanordnung mit den Primärspulen 12 und der Sekundärspule 26 der in Fig. 5A gezeigten beispielhaften Vorrichtung mit vereinten Resolverfunktion und kontaktloser Energieübertragungsfunktion auf einen Verbraucher auf dem Rotor.

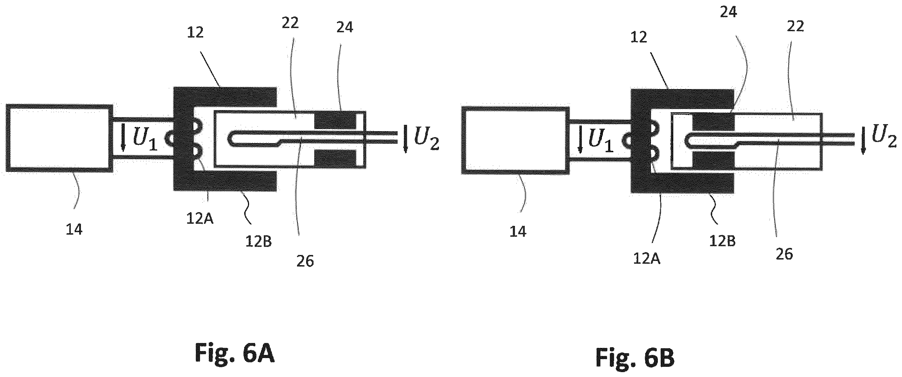

Zur besseren Veranschaulichung ist ferner in Figur 6 eine Schnittansicht des in Figur 5A gezeigten Aufbaus dargestellt.

Insbesondere zeigt **Figur 6A** eine Schnittansicht des magnetischen Kreises aus Figur 5A entlang der Linie A-A' als Blockschaltbild. **Figur 6B** zeigt eine Schnittansicht des magnetischen Kreises aus Figur 5A entlang der Linie B-B' als Blockschaltbild. In Figur 6B ist der Abstand zwischen dem Ferritkern 24 und der jeweiligen dem Ferritkern 24 gegenüberliegenden Primärspule 12 gering und die Induktivität der Primärspule 12 entsprechend hoch (vgl. mit Figur 2B). In Figur 6A ist der Abstand zwischen dem Ferritkern 24 und der jeweiligen dem Ferritkern gegenüberliegenden Primärspule 12 groß und die Induktivität der Primärspule 12 entsprechend gering (vgl. mit Figur 2A).

Der Oszillator 14 kann z.B. ein Royer-Oszillator sein. Der Royer-Oszillator umfasst einen zur jeweiligen Primärspule 12 parallel geschalteten Kondensator $C_1$, der zusammen mit der Induktivität $L_1$ der Primärspule 12 einen Parallelschwingkreis bildet. Dieser Oszillator-Typ betreibt den aus $L_1$ und $C_1$ gebildeten Schwingkreis ausschließlich im Resonanzpunkt. Die Resonanzfrequenz $f_{res}$, mit der der Oszillator schwingt, hängt von $L_1$ und $C_1$ ab:

$$f_{res} = \frac{1}{2\pi\sqrt{L_1 C_1}} \tag{1}$$

Der Royer-Oszillator 14 wird von einer Gleichspannungsquelle mit Energie versorgt, die intern in eine Wechselspannung umgewandelt wird. Es gilt folgender Zusammenhang zwischen eingangsseitiger Gleichspannung $U_{1,DC}$ und ausgangsseitiger Wechselspannung $U_1$:

$$U_1 = \frac{\pi}{\sqrt{2}} U_{1,DC} \tag{2}$$

Das durch die Primärspule 12 erzeugte magnetische Wechselfeld durchdringt die Sekundärspule 26 auf dem Rotor 20 und induziert in die Sekundärspule 26 eine Wechselspannung. Die an der Primärspule 12 angelegte Spannung $U_1$ und die in die Sekundärspule 26 induzierte Spannung $U_2$ hängen folgendermaßen zusammen:

$$U_2 = k \cdot \sqrt{\frac{L_2}{L_1}} \cdot U_1 \tag{3}$$

In der obigen Gleichung bezeichnet:

$L_1$ die Induktivität der Primärspule 12;
$L_2$ die Induktivität der Sekundärspule 26; und
$k$ den magnetische Kopplungsfaktor von Primär- und Sekundärspule. Bei kontaktloser induktiver Energieübertragung liegt dieser Wert üblicherweise zwischen 0,1 und 0,5, beispielsweise bei etwa 0,3.

Über das Verhältnis der Induktivitäts-Werte $L_1$ und $L_2$ kann bei gegebenem Kopplungsfaktor $k$ die Ausgangsspannung der induktiven Energieübertragungsstrecke definiert werden. Je nach benötigter Spannung auf dem Verbraucher im Rotor 20 kann das Induktivitäts-Verhältnis $L_2/L_1$ durch Ändern der Windungszahl der Sekundär- und/oder der Primärspule den Gegebenheiten angepasst werden.

Gemäß den obigen Gleichungen ergibt sich für die rotorseitig induzierte Spannung $U_2$ die folgende Gleichung:

$$U_2 = k \cdot \sqrt{\frac{L_2}{L_1}} \cdot \frac{\pi}{\sqrt{2}} U_{1,DC} \tag{4}$$

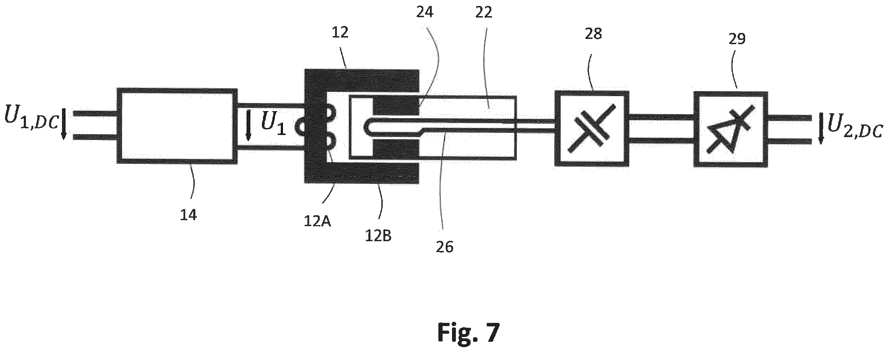

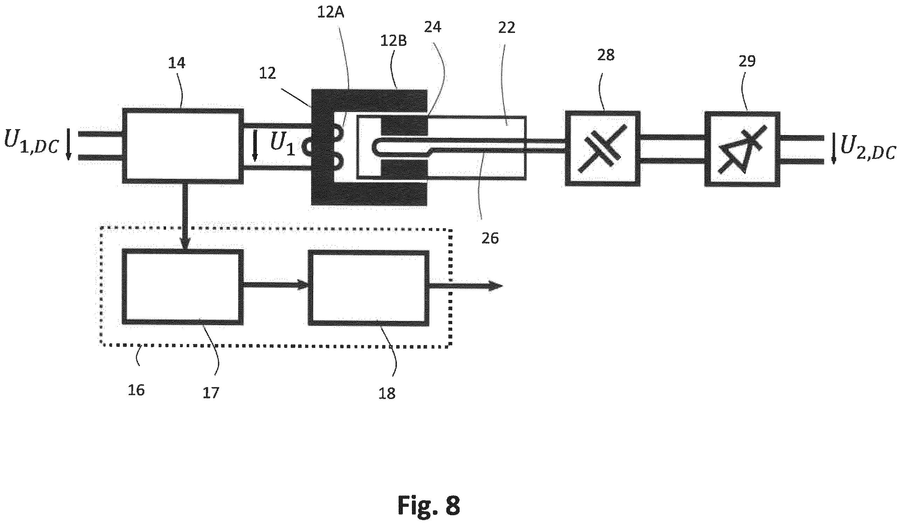

Auf Grund einer nichtidealen Kopplung des Spulenpaars (beispielsweise $k \approx 0,3$) ist die sekundärseitige Ausgangsspannung $U_2$ vom entnommenen Strom abhängig. Um dies auszugleichen, kann die Energieübertragungsstrecke sekundärseitig kompensiert werden. Dafür kann ein entsprechender Kompensator 28 vorgesehen werden. Durch diese Maßnahme wird die Ausgangsspannung in allen relevanten Betriebsbereichen im Wesentlichen unabhängig von der Stromentnahme. Da auf dem Rotor 20 üblicherweise eine Gleichspannung benötigt wird, kann der eigentlichen IPT Strecke ein Gleichrichter 29 (wie z.B. ein Brückengleichrichter) nachgeschaltet werden. Ein Blockschaltbild des sich ergebenden Aufbaus ist in **Figur 7** dargestellt. Figur 7 zeigt eine Schnittansicht eines magnetischen Kreises ähnlich dem in Figur 5A oder 8 gezeigten magnetischen Kreis, ergänzt um eine sekundärseitige Kompensation mittels eines Kompensators 28 und um einen Gleichrichter 29.

Die am Ausgang des Gleichrichters 29 anliegende Spannung $U_{2,DC}$ lässt sich folgendermaßen berechnen:

$$U_{2,DC} \cong 0{,}9 U_2 \tag{5}$$

Für den Zusammenhang aus Eingangsspannung $U_{1,DC}$ und Ausgangsspannung $U_{2,DC}$ ergibt sich:

$$U_{2,DC} \cong 0{,}9 k \cdot \sqrt{\frac{L_2}{L_1}} \cdot \frac{\pi}{\sqrt{2}} U_{1,DC} \tag{6}$$

Induktivitätsmessung

Wie oben beschrieben, ist die Induktivität $L_1$ der jeweiligen Primärspule 12 vom Rotorwinkel abhängig. Folglich ändert sich auch die Resonanzfrequenz $f_{res}$ des entsprechenden Oszillators 14. Es ergibt sich der folgende Zusammenhang zwischen der Resonanzfrequenz $f_{res}$ und der Induktivität $L_1$:

$$f_{res} \propto \frac{1}{\sqrt{L_1}} \text{ bzw. } f_{res} = d \frac{1}{\sqrt{L_1}} \tag{7}$$

Beim Faktor $d$ handelt es sich um eine von der Auslegung abhängige Konstante. Entsprechend lassen sich aus der gemessenen Frequenz der Oszillatoren 14 die Induktivitäten der jeweiligen Primärspulen 12 bestimmen. Dieses Verfahren ist mit geringen Mitteln sehr präzise umsetzbar, da Frequenzen leicht messbar sind. Eine in der Praxis gängige Methode ist die Frequenzmessung mittels einer programmierbaren Logik (FPGA).

**Figur 8** zeigt ein Blockschaltbild einer beispielhaften Vorrichtung zur kontaktlosen Energieübertragung auf einen auf dem Rotor einer elektrischen Maschine angeordneten Verbraucher und zur Erfassung der Winkelposition des Rotors. Die Vorrichtung umfasst eine Energieübertragungsstrecke (IPT Strecke) und einen Frequenzmesser 16, welcher eine programmierbare Logik (FPGA) 17 zur Frequenzmessung und ein Tiefpassfilter 18 umfasst.

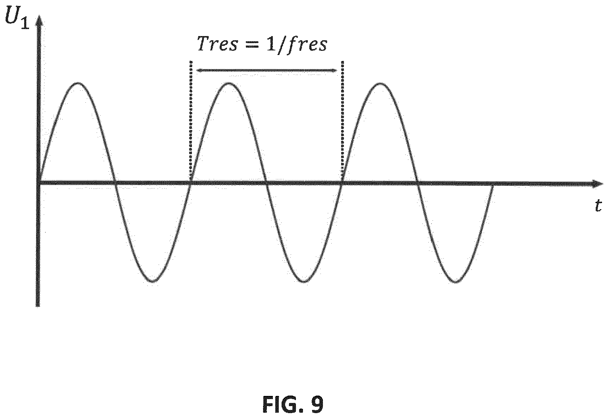

**Figur 9** zeigt den Spannungsverlauf der primärseitigen Spulenspannung (d.h. der Spannung $U_1$ der Primärspule 12) als Funktion der Zeit t. Der Spannungsverlauf variiert mit einer Periodendauer $T_{res}$.

Wie in den Figuren 8 und 9 gezeigt, wird das Frequenzsignal des Royer-Oszillators 14 dem Frequenzmesser 16 mit der programmierbaren Logik (FPGA) 17 zugeführt und daraus die Frequenz bzw. Periodendauer des jeweiligen Oszillators durch Zeitmessung rekonstruiert. Anschließend kann das gewonnene Ergebnis mit einem Tiefpassfilter 18 gefiltert werden, um mögliche Störungen zu entfernen. Eine geringere Grenzfrequenz des Tiefpassfilters 18 wirkt sich vorteilhaft auf die Robustheit der Messanordnung aus, kann jedoch die Dynamik eines gesamten (nicht gezeigten) Steuerungssystems, in dem der Resolver als Sensor verwendet wird, reduzieren.

Da aus dem Zusammenspiel der einzelnen Frequenzen der Oszillatoren die momentane Lage des Rotors ermittelt werden soll, ist es vorteilhaft, wenn die Messanordnung schnell auf eine Frequenzänderung ansprechen kann. Die Grenzfrequenz des Tiefpassfilters 18 wird vorzugsweise so gewählt, dass diese weit über der höchstens zu erwartenden Rotordrehzahl liegt. Die Grenzfrequenz des Tiefpassfilters 18 kann z.B. im Bereich von wenigen Zehn Hz bis mehreren Zehn kHz liegen.

Welches Signal zur Messung der Resonanzfrequenz am Royer-Oszillator 14 abgegriffen wird ist unerheblich. Wie in Figur 9 gezeigt, könnte dazu die Schwingkreisspannung $U_1$ genutzt werden. Diese Spannung kann je nach Auslegung relativ hoch werden und nur noch über Umwege gemessen werden. Alternativ kann auch die Steuerspannung eines Leistungshalbleiters zur Auswertung genutzt werden.

In den obigen Beispielen umgibt der Rotor 20 den Stator 10. Eine Anordnung mit einem Innenrotor 20, der vom Stator 10 umgeben wird, ist ebenfalls möglich.

In den obigen Beispielen ist der Magnetring 23 aus diskreten magnetischen Elementen (Magnetkerne) gebildet. Der Magnetring 23 kann ebenfalls als ein kontinuierlicher Magnetring ausgebildet werden. Ferner sind in den obigen Beispielen die Ferritkerne ellipsenförmig angeordnet. Andere Konfigurationen, bei denen sich der Abstand zwischen dem Ferritkern/magnetischen Material und der dem Ferritkern/magnetischen Material gegenüberliegenden Primärspule und/oder die Mange des magnetischen Materials in der Umgebung der Primärspule und somit die Induktivität der Primärspule mit dem zu messenden Rotationswinkel ändert, sind ebenfalls möglich.

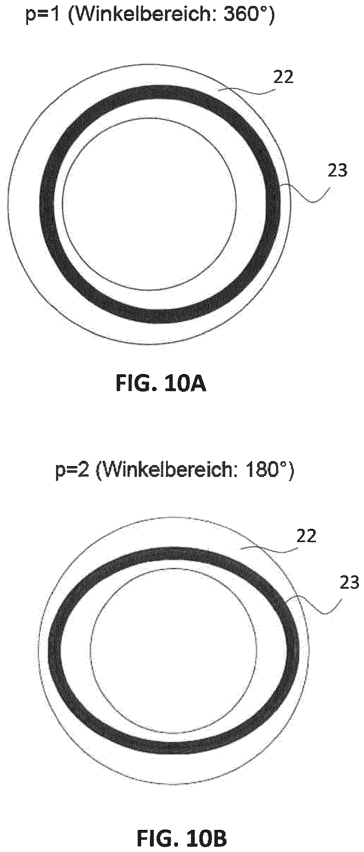

**Figuren 10A** bis **10F** zeigen weitere beispielhafte Ausführungen eines Magnetrings. In den Figuren 10A bis 10F ist der Magnetring 23 als ein kontinuierlicher Magnetring ausgebildet. Anstelle des kontinuierlichen Magnetrings 23 kann auch ein Magnetring eingesetzt werden, welcher, wie oben beschrieben, aus diskreten Magnetkernen gebildet ist.

**Figur 10A** zeigt einen Träger 22 mit einem kreisrunden Magnetring 23, welcher exzentrisch bzw. versetzt zur Drehachse des Rotors angeordnet ist. Diese Anordnung ist für eine Winkelmessung in einem 360° Fenster bzw. Winkelbereich (360°/p, p = 1) geeignet.

**Figur 10B** zeigt einen Träger 22 mit einem elliptischen Magnetring 23, der konzentrisch zur Drehachse des Rotors angeordnet ist. Die Drehachse des Rotors schneidet die Ellipse in deren Mittelpunkt. Diese Anordnung ist für eine Winkelmessung in einem 180° Fenster bzw. Winkelbereich (180°/p, p = 2) geeignet.

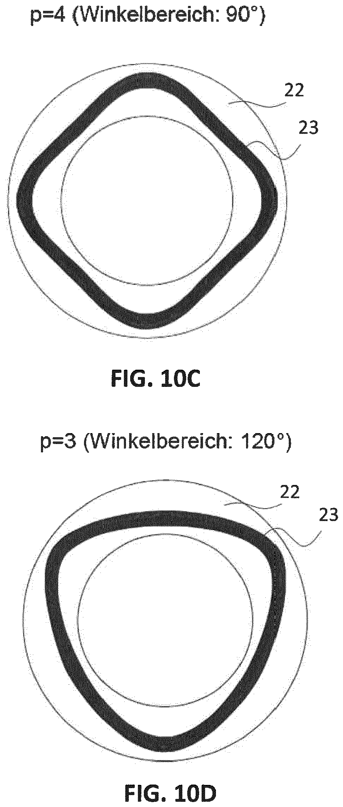

**Figur 10C** zeigt einen Träger 22 mit einem Magnetring 23 mit einer im Wesentlichen quadratischen Form, welche vier abgerundeten Kanten bzw. Ausprägungen nach außen aufweist (Schmetterlingsform). Diese Anordnung ist für eine Winkelmessung in einem 90° Fenster bzw. Winkelbereich (360°/p, p = 4) geeignet.

**Figur 10D** zeigt einen Magnetring 23 mit einer im Wesentlichen dreieckigen Form mit drei abgerundeten Kanten bzw. Ausprägungen nach außen. Diese Anordnung ist für eine Winkelmessung in einem 120° Fenster bzw. Winkelbereich (360°/p, p = 3) geeignet.

Andere Formen mit einer anderen Anzahl von Kanten bzw. Ausprägungen nach außen (z.B. 2, 5, 6, usw.) sind ebenfalls möglich.

Bei den in Figuren 10A bis 10D gezeigten Beispielen sind die Dicke und die Breite des Magnetrings 23 im Wesentlichen konstant. Anders ausgedrückt weisen die in den Figuren 10A und 10D gezeigten Magnetringen einen im Wesentlichen konstanten, winkelunabhängigen Querschnitt auf. Die Dicke und/oder die Breite des Magnetrings 23 können jedoch variabel sein und somit die Winkelposition des Rotors kodieren.

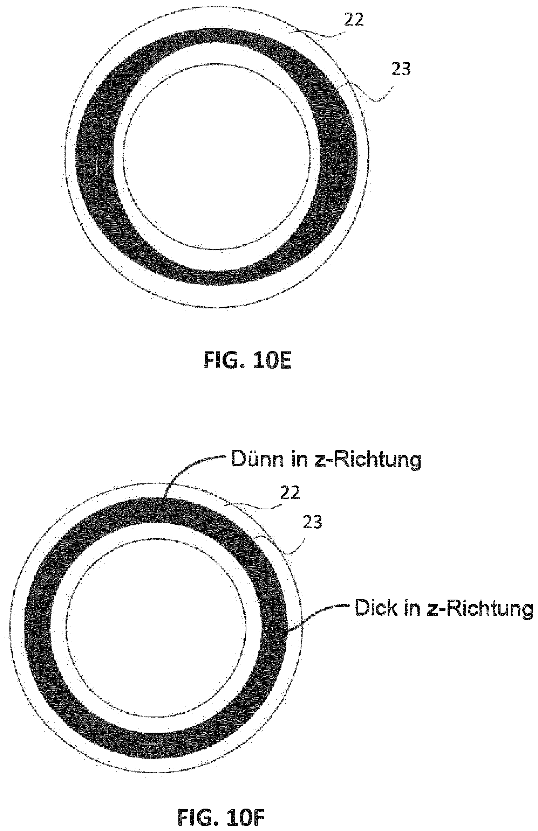

Figur **10E** zeigt einen elliptischen Magnetring 23, der konzentrisch zur Drehachse des Rotors angeordnet ist, wobei sich die Breite des Magnetrings bzw. die Breite des magnetischen Materials mit dem Winkel verändert. Diese Anordnung ist für eine Winkelmessung in einem 180° Fenster bzw. Winkelbereich (180°/p, p = 2) geeignet.

Figur **10F** zeigt einen kreisrunden Magnetring 23, der konzentrisch zur Drehachse des Rotors angeordnet ist, wobei sich die Dicke des Magnetrings in z-Richtung mit dem Winkel verändert. Die z-Richtung ist die Richtung senkrecht zu der Ebene, in welcher der Magnetring 23 liegt. Diese Anordnung ist ebenfalls für eine Winkelmessung in einem 180° Fenster bzw. Winkelbereich (180°/p, p = 2) geeignet.

Bedingt durch die Anordnung des Magnetrings 23 zur Drehachse des Rotor, die Form des Magnetrings und/oder die Verteilung des magnetischen Materials des Magnetrings ändert sich beim Drehen des Rotors und des sich mit dem Rotor mitdrehenden Magnetrings die Induktivität jeder der Primärspulen, wobei die Änderung der Induktivität abhängig von der Winkelposition des Rotors ist. Somit kann, wie oben beschrieben, die Winkelposition des Rotors ermittelt werden.

Die oben beschriebenen Vorrichtungen zur kontaktlosen Energieübertragung auf einen auf dem Rotor einer elektrischen Maschine angeordneten Verbraucher und zur Erfassung der Winkelposition des Rotors können in einer elektrischen Maschine (z.B. einem Motor oder einem Generator) verwendet werden. Die elektrische Maschine kann insbesondere eine Synchronmaschine sein.

Die elektrische Maschine kann eine elektrische Maschine mit einem Außenrotor (Außenläufer) sein, wie in Figuren 1 bis 5B gezeigt. Bei dieser Bauform befindet sich der ruhende Teil (Stator) der Maschine in ihrem Innern und ist vom bewegten Teil (Rotor) umgeben.

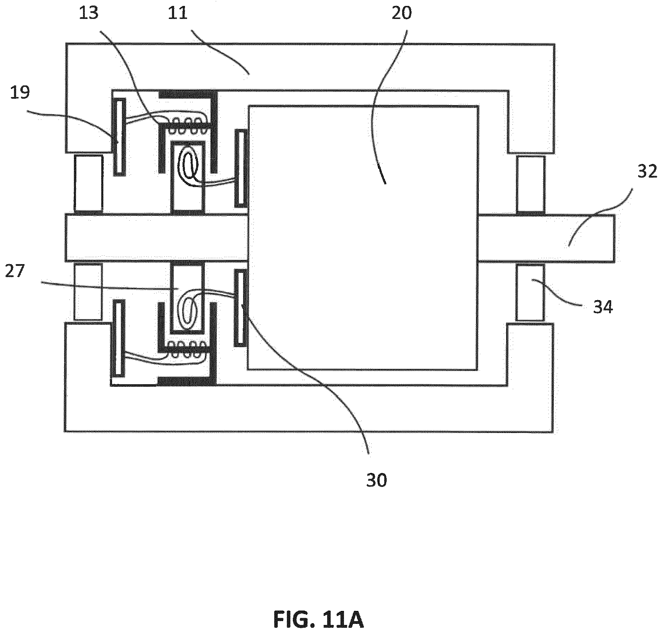

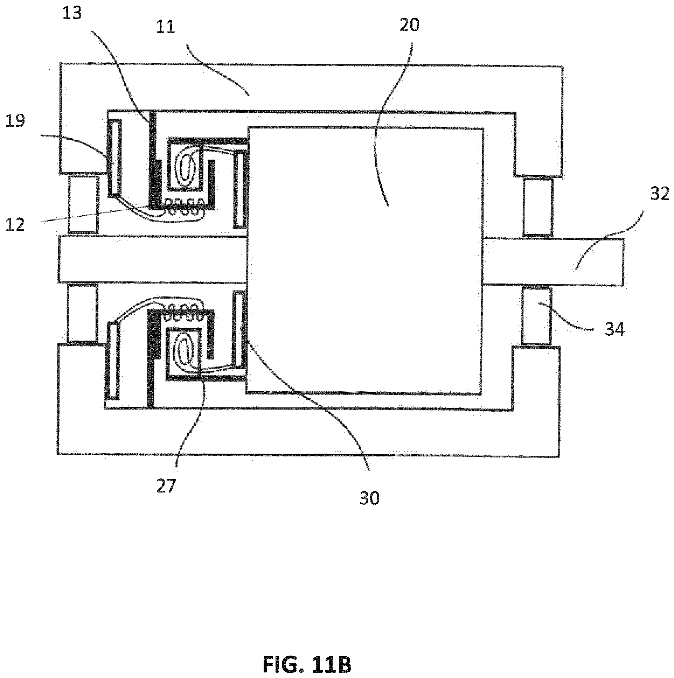

Die elektrische Maschine kann auch eine elektrische Maschine mit einem Innenrotor (Innenläufer) sein. Bei dieser Bauart befindest sich der rotierende Teil (Rotor) der Maschine im Inneren und ist vom ruhenden Teil (Stator) umgeben. **Figuren 11A** und **11B** zeigen jeweils beispielhafte elektrische Maschinen 1 mit einem Innenrotor. Insbesondere zeigen die Figuren 11A und 11B jeweils einen Schnitt entlang der Drehachse des Rotors.

Jede der in Figuren 11A und 11B gezeigte elektrische Maschine 1 umfasst einen Stator mit einem Gehäuse (Statorgehäuse) 11. Der Rotor 20 befindet sich im Inneren des Statorgehäuses 11 bzw. ist vom Statorgehäuse 11 umgeben. Der Rotor 20 ist mittels Lager 34 an der Rotorwelle 34 gelagert. Die Drehachse der Rotorwelle 34 fällt mit der Drehachse des Rotors 10 zusammen.

Wie oben beschrieben umfasst die elektrische Maschine ferner eine Mehrzahl (beispielsweise 2, 3, 4, etc.) von Primärspulen, welche sowohl der kontaktlosen Energieübertragung als auch der Messung der Winkelposition des Rotors dienen. Die Primärspulen können als U-Kern Spulen ausgebildet sein und eine Wicklung und einen C-förmigen Magnetkern aufweisen. Zum Halten der Primärspulen sind am Statorgehäuse 11 entsprechende Halterungen angebracht bzw. angeordnet. In Figuren 11A und 11B bezeichnet das Bezugszeichen 13 die jeweilige Primärspule (mit Wicklung und magnetischem Material) und die dazugehörige Halterung.

Jede der Primärspulen ist elektrisch mit einem Oszillator/Wechselrichter (Inverter) und gegebenenfalls mit weiteren elektrischen oder elektronischen Komponenten verbunden. Der Wechselrichter und gegebenenfalls die weiteren elektrischen oder elektronischen Komponenten sind Bestandteil einer Primärelektronikanordnung 19, welche im oder am Statorgehäuse 11 angebracht bzw. angeordnet ist. Ferner kann im oder am Statorgehäuse 11 eine elektronische Anordnung (nicht gezeigt) zur Ermittlung der Winkelposition des Rotors 10 angebracht bzw. angeordnet werden. Die elektronische Anordnung zur Ermittlung der Winkelposition des Rotors kann, wie oben beschrieben, ein Frequenzmesser mit einer programierbaren Logik und optional ein Tiefpassfilter sowie andere elektronische Komponenten umfassen. Die elektronische Anordnung zur Ermittlung der Winkelposition des Rotors 10 kann in der Primärelektronikanordnung 19 integriert sein.

Die elektrische Maschine umfasst ferner eine Mehrzahl von Sekundärspulen, welche ringförmig um die Drehachse des Rotors angeordnet sind. Mit Hilfe der Sekundärspulen erfolgt, wie oben beschrieben, die induktive Energieübertragung auf einen Verbraucher auf dem Rotor 10. Jede der Sekundärspulen kann zumindest eine Wicklung aus einem elektrischen Leiter und einen Magnetkern aus einem weichmagnetischen Material (z.B. Ferrit) umfassen. Zum Halten der Sekundärspulen 26 sind entsprechende Halterungen vorgesehen, welche am Rotor 10 angebracht bzw. angeordnet sind, oder mit dem Rotor 10 verbunden sind. In Figuren 11A und 11B bezeichnet das Bezugszeichen 27 die jeweilige Sekundärspule (mit Wicklung und magnetischem Material) und die dazugehörige Halterung.

Jede der Sekundärspulen ist mit einer Sekundärektronikanordnung 30 elektrisch verbunden. Die Sekundärektronikanordnung 30 umfasst z.B. einen Gleichrichter und optional einen Kompensator. Die Sekundärektronikanordnung 30 ist im oder am Rotor 10 angebracht.

Die elektrische Maschine umfasst ferner (nicht gezeigt) einen Magnetring aus magnetischem Material, welcher sich mit dem Rotor mitdreht. Wie oben beschrieben ist der Magnetring derart ausgelegt und angeordnet, um die Induktivität jeder der Primärspulen als Funktion des Winkelposition des Rotors zu verändern. Wie in den Figuren 1 bis 5B gezeigt, kann der Magnetring um die Primärspulen herum angeordnet werden (d.h. die Primärspulen befinden sich innerhalb des Magnetrings). Ebenfalls können die Primärspulen außerhalb des Magnetrings angeordnet werden.

Die in Figur 11A und in Figur 11B gezeigten Beispielen unterscheiden sich im Wesentlichen durch die Anordnung der Primärspulen mit den entsprechenden Halterungen 13 in Bezug auf die Sekundärspulen mit den entsprechenden Halterungen 27. Bei der in Fig. 11A gezeigten elektrischen Maschine sind die Primärspulen mit den entsprechenden Halterungen 13 weiter außen in radialer Richtung in Bezug auf die Sekundärspulen mit den entsprechenden Halterungen 27 angeordnet. Bei einer Rotation des Rotors greifen die Sekundärspulen "von ihnen" in die gabelförmigen Halterungen der Primärspulen ein. Die radiale Richtung ist eine Richtung senkrecht zur Drehachse des Rotors bzw. senkrecht zur Drehwelle 34.

Bei der in Fig. 11B gezeigten elektrischen Maschine sind die Primärspulen mit den entsprechenden Halterungen 13 weiter innen in radialer Richtung in Bezug auf die Sekundärspulen mit den entsprechenden Halterungen 27 angeordnet. Bei einer Rotation des Rotors greifen die Sekundärspulen "von außen" in die gabelförmigen Halterungen der Primärspulen ein. Andere geeignete Anordnungen der Primär- und Sekundärspulen und den entsprechenden Halterungen sind ebenfalls möglich.

**Bezugszeichenliste**

| | |
|---|---|
| 10 | Stator |
| 11 | Statorgehäuse |
| 12 | Primärspule |
| 12A | Wicklung der Primärspule aus einem elektrischen Leiter |
| 12 | Magnetkern (z.B. Ferritkern) der Primärspule |
| 13 | Primärspule mit Halterung |
| 14 | Oszillator (z.B. Royer-Oszillator) |
| 16 | Frequenzmesser |
| 17 | programmierbare Logik (FPGA) |
| 18 | Tiefpassfilter |
| 19 | Primärelektronikanordnung |
| 20 | Rotor |
| 22 | Träger aus nicht magnetischem Material (Rotorträger) |
| 23 | Magnetring |
| 24 | Magnetkern(e) (z.B. Ferritkern(e)) |
| 26 | Sekundärspule |
| 27 | Sekundärspule mit Halterung |
| 28 | Kompensator |
| 29 | Gleichrichter |
| 30 | Sekundärektronikanordnung |

32 Rotorwelle
34 Lager

**Patentansprüche**

1. Vorrichtung umfassend:

   eine induktive Energieübertragungsstrecke zur induktiven Übertragung elektrischer Energie auf einen auf einem Rotor (20) einer elektrischen Maschine angeordneten elektrischen Verbraucher; und
   einen Resolver zur Erfassung einer Winkelposition des Rotors (20),
   wobei die induktive Energieübertragungsstrecke und der Resolver denselben magnetischen Kreis verwenden,
   wobei die induktive Energieübertragungsstrecke umfasst:

   einen Energiesender mit zumindest einer Primärspule (12) und zumindest einem Oszillator (14), wobei die Primärspule elektrisch mit dem Oszillator (14) verbunden ist oder Bestandteil des Oszillators ist, und
   einen Energieempfänger mit zumindest einer Sekundärspule (26);

   wobei der Resolver umfasst:

   eine Anordnung mit zumindest einem Magnetring (23) aus magnetischem Material, wobei der Magnetring (23) so anordenbar ist, dass er sich mit dem Rotor (12) mitdreht, und wobei der Magnetring (23) derart ausgebildet und anordenbar ist, dass bei einer Drehung des Rotors unterschiedliche Bereiche des Magnetrings nacheinander in eine der zumindest einen Primärspule gegenüberliegende Position gebracht werden und die Induktivität der zumindest einen Primärspule in Abhängigkeit von der Winkelposition des Rotors ändern,
   zumindest eine Messspule (12) zur Messung der Winkelposition des Rotors, wobei die zumindest eine Primärspule (12) zugleich die Messspule des Resolvers ist, und
   einen Frequenzmesser (16) zur Messung der Resonanzfrequenz des zumindest einen Oszillators (14);
   wobei die Erfassung der Winkelposition des Rotors (20) durch die Messung der von der Winkelpositions-abhängigen Induktivität der zumindest einen Primärspule (12) abhängigen Resonanzfrequenz des zumindest einen Oszillators (14) mit dem Frequenzmesser (16) erfolgt;
   wobei die Erfassung einer Winkelposition des Rotors und die induktive Übertragung elektrischer Energie auf den elektrischen Verbraucher gleichzeitig erfolgen.

2. Vorrichtung gemäß Anspruch 1,

   wobei der Magnetring (23) ein kontinuierlicher Magnetring ist, wobei unterschiedliche Bereiche des Magnetrings (23) mit unterschiedlichen Abständen zur Drehachse des Rotors (20) anordenbar sind und/oder unterschiedlichen Dicken und/oder Breiten des magnetischen Materials aufweisen; oder
   wobei der Magnetring (23) aus einer Vielzahl von Magnetkernen (24) gebildet ist, welche mit unterschiedlichen Abständen zur Drehachse des Rotors (20) anordenbar sind und/oder unterschiedlichen Formen aufweisen.

3. Vorrichtung gemäß Anspruch 1 oder 2,
   wobei der Magnetring (23) eine im Wesentlichen elliptische, dreieckige, quadratische oder andere nicht kreisrunde Form aufweist.

4. Vorrichtung gemäß einem der vorangegangenen Ansprüche, wobei der Magnetring (23) versetzt zur Drehachse des Rotors (20) anordenbar ist.

5. Vorrichtung gemäß einem der vorangegangenen Ansprüche,

   wobei der Magnetring (23) ein kontinuierlicher Magnetring ist, welcher aus Ferrit oder aus magnetischem Kunststoff gebildet ist; oder
   wobei der Magnetring (23) aus einer Vielzahl von Magnetkernen (24) gebildet ist, wobei die Magnetkerne (24) Ferritkerne sind.

6. Vorrichtung gemäß einem der vorangegangenen Ansprüche, wobei der Oszillator (14) ein Royer-Oszillator ist.

**7.** Vorrichtung gemäß einem der vorangegangenen Ansprüche, wobei die Energieübertragungsstrecke einen Kompensator (28), welcher ausgebildet ist, eine Abhängigkeit der in der zumindest einen Sekundärspule induzierten Spannung vom entnommenen Strom in zumindest einem vorgegebenen Betriebsbereich zu kompensieren, und/oder einen Gleichrichter (29) umfasst.

**8.** Vorrichtung gemäß einem der vorangegangenen Ansprüche, wobei der Resolver ein Tiefpassfilter (18) umfasst.

**9.** Vorrichtung gemäß einem der vorangegangenen Ansprüche, wobei der Rotor ein Innenrotor ist.

**10.** Elektrische Maschine, umfassend:

einen Rotor (20);
einen Stator (10); und
eine Vorrichtung gemäß einem der vorangegangenen Ansprüche, wobei die zumindest eine Primärspule (12) statorseitig und die zumindest eine Sekundärspule (26) rotorseitig angebracht sind.

**11.** Elektrische Maschine gemäß Anspruch 10, wobei die elektrische Maschine eine Synchronmaschine ist.

**12.** Verfahren zur kontaktlosen Energieübertragung auf einen auf einem Rotor (20) einer elektrischen Maschine angeordneten elektrischen Verbraucher und zur Erfassung der Winkelposition des Rotors (20) umfassend:

Bereitstellen der elektrischen Maschine gemäß Anspruch 10 mit dem Rotor (20) und dem auf dem Rotor (20) angeordneten elektrischen Verbraucher; und
kontaktlose Energieübertragung auf den auf dem Rotor (20) angeordneten elektrischen Verbraucher und Erfassung der Winkelposition des Rotors (20) mittels der bereitgestellten Vorrichtung.

**Claims**

**1.** A device comprising:

an inductive power transfer path for the inductive transfer of electric power to an electrical load arranged on a rotor (20) of an electric machine; and
a resolver for detecting an angular position of the rotor (20),
wherein the inductive power transfer path and the resolver use the same magnetic circuit,
wherein the inductive power transfer path comprises:

a power transmitter with at least one primary coil (12) and at least one oscillator (14), wherein the primary coil is electrically connected with oscillator (14) or is a part of the oscillator; and
a power receiver with at least one secondary coil (26),

wherein the resolver comprises:
an arrangement with at least one magnetic ring (23) made of magnetic material, wherein the magnetic ring (23) is arrangeable so as to rotate together with the rotor (12), and wherein the magnetic ring (23) is designed and arrangeable such that upon a rotation of the rotor (20) different regions of the magnetic ring are successively brought into a position opposing the at least one primary coil and change the inductance of the at least one primary coil depending on the angular position of the rotor,

at least one measuring coil (12) for measuring the angular position of the rotor, wherein the at least one primary coil (12) is at the same time the measuring coil of the resolver; and
a frequency meter (16) for measuring the resonance frequency of the at least one oscillator (14),

wherein the detection of the angular position of the rotor (20) is carried out by measuring with the frequency meter (16) of the resonant frequency of the at least one oscillator (14) that is dependent from the angle-dependent inductance of the at least one primary coil (12);
wherein the detection of the angular position of the rotor and the inductive transfer of electric power to the electrical load electrical load take place simultaneously.

**2.** The device according to claim 1,

wherein the magnetic ring (23) is a continuous magnetic ring, wherein different areas of the magnetic ring (23) are arrangeable at different distances from the rotation axis of the rotor (20) and/or have different thicknesses and/or different widths of the magnetic material; or
wherein the magnetic ring (23) is formed from a plurality of magnetic cores (24) arrangeable at different distances from the rotation axis of the rotor (20) and/or having different shapes.

**3.** The device according to claim 1 or 2,
wherein the magnetic ring (23) has a substantially elliptical, triangular, square or other non-circular shape.

**4.** The device according to one of the preceding claims, wherein the magnetic ring (23) is arrangeable in a manner offset to the rotation axis of the rotor (20).

**5.** The device according to one of the preceding claims,

wherein the magnetic ring (23) is a continuous magnetic ring formed from ferrite or from magnetic plastics; or
wherein the magnetic ring (23) is formed from a plurality of magnetic cores (24), the magnetic cores (24) being ferrite cores.

**6.** The device according to one of the preceding claims, wherein the oscillator (14) is a Royer oscillator.

**7.** The device according to one of the preceding claims, wherein the power transfer path comprises

a compensator (28), which is designed to compensate for a dependency of the voltage induced in the at least one secondary coil on the drawn current in at least a predetermined operating range; and/or
a rectifier (29).

**8.** The device according to one of the preceding claims, wherein the resolver comprises a low-pass filter (18).

**9.** The device according to one of the preceding claims, wherein the rotor is an internal rotor.

**10.** An electric machine, comprising:

a rotor (20);
a stator (10); and
a device according to one of the preceding claims, wherein the at least one primary coil (12) is arranged on the stator side and the at least one secondary coil (26) is arranged on the rotor side.

**11.** The electric machine according to claim 10, wherein the electric machine is a synchronous machine.

**12.** A method for the contactless power transfer to an electrical load arranged on a rotor (20) of an electric machine and for detecting the angular position of the rotor (20), comprising:

providing the electric machine according to claim 10 with the rotor (20) and the electrical load arranged on a rotor (20); and
contactless power transfer to the electrical load arranged on the rotor (20) and detection of the angular position of the rotor (20) by means of the device provided.

**Revendications**

**1.** Dispositif comportant :

un trajet de transmission d'énergie inductif pour la transmission inductive d'énergie électrique à un consommateur électrique disposé sur un rotor (20) d'une machine électrique ; et
un résolveur destiné à détecter une position angulaire du rotor (20),
dans lequel le trajet de transmission d'énergie inductif et le résolveur utilisent le même circuit magnétique,

dans lequel le trajet de transmission d'énergie inductif comporte :

un émetteur d'énergie doté d'au moins une bobine primaire (12) et d'au moins un oscillateur (14), la bobine primaire étant électriquement reliée à l'oscillateur (14) ou faisant partie de l'oscillateur, et
un récepteur d'énergie doté d'au moins une bobine secondaire (26) ;
dans lequel le résolveur comporte :

un ensemble comprenant au moins un anneau magnétique (23) constitué d'un matériau magnétique, l'anneau magnétique (23) pouvant être disposé de manière à tourner conjointement avec le rotor (12), et l'anneau magnétique (23) étant conçu et pouvant être disposé de telle façon que lors d'une rotation du rotor, des régions différentes de l'anneau magnétique sont mise consécutivement dans une position opposée à l'au moins une bobine primaire et l'inductance de l'au moins une bobine primaire varie en fonction de la position angulaire du rotor,
au moins une bobine de mesure (12) destinée à mesurer la position angulaire du rotor, l'au moins une bobine primaire (12) étant simultanément la bobine de mesure du résolveur, et
un dispositif de mesure de fréquence (16) destiné à mesurer la fréquence de résonance de l'au moins un oscillateur (14) ;
dans lequel la détection de la position angulaire du rotor (20) est effectuée en mesurant la fréquence de résonance de l'au moins un oscillateur (14) à l'aide du dispositif de mesure de fréquence (16), laquelle dépend de l'inductance de l'au moins une bobine primaire (12) en fonction de la position angulaire ;
dans lequel la détection d'une position angulaire du rotor et la transmission inductive d'énergie électrique au consommateur électrique sont effectuées simultanément.

2. Dispositif selon la revendication 1,

dans lequel l'anneau magnétique (23) est un anneau magnétique continu, dans lequel des régions différentes de l'anneau magnétique (23) peuvent être disposées selon des intervalles différents par rapport à l'axe de rotation du rotor (20) et/ou présentent des épaisseurs et/ou des largeurs différentes du matériau magnétique ; ou
dans lequel l'anneau magnétique (23) est constitué d'une multitude de noyaux magnétiques (24), lesquels peuvent être disposés selon des intervalles différents par rapport à l'axe de rotation du rotor (20) et/ou lesquels présentent des formes différentes.

3. Dispositif selon la revendication 1 ou 2,
dans lequel l'anneau magnétique (23) présente une forme essentiellement elliptique, triangulaire, quadrangulaire ou une autre forme noncirculaire.

4. Dispositif selon l'une des revendications précédentes, dans lequel l'anneau magnétique (23) peut être disposé en décalage par rapport à l'axe de rotation du rotor (20).

5. Dispositif selon l'une des revendications précédentes,

dans lequel l'anneau magnétique (23) est un anneau magnétique continu, lequel est constitué de ferrite ou d'une matière synthétique magnétique ; ou
dans lequel l'anneau magnétique (23) est constitué d'une multitude de noyaux magnétiques (24), les noyaux magnétiques (24) étant des noyaux de ferrrite.

6. Dispositif selon l'une des revendications précédentes, dans lequel l'oscillateur (14) est un oscillateur Royer.

7. Dispositif selon l'une des revendications précédentes, dans lequel le trajet de transmission d'énergie inductif comporte un compensateur (28), lequel est conçu pour compenser une dépendance de la tension induite dans l'au moins une bobine secondaire par rapport au courant prélevé dans au moins une plage de fonctionnement prédéfinie, et/ou un redresseur (29).

8. Dispositif selon l'une des revendications précédentes, dans lequel le résolveur comporte un filtre passe-bas (18).

9. Dispositif selon l'une des revendications précédentes, dans lequel le rotor est un rotor interne.

**10.** Machine électrique, comportant :

un rotor (20) ;
un stator (10) ; et
un dispositif selon l'une des revendications précédentes, dans lequel l'au moins une bobine primaire (12) est fixée côté stator et l'au moins une bobine secondaire (26) est fixée côté rotor.

**11.** Machine électrique selon la revendication 10, dans laquelle la machine électrique est une machine synchrone.

**12.** Procédé de transmission d'énergie sans contact à un consommateur électrique disposé sur un rotor (20) d'une machine électrique et de détection de la position angulaire du rotor (20), comportant :

la mise à disposition de la machine électrique selon la revendication 10 avec le rotor (20) et le consommateur électrique disposé sur le rotor (20) ;
la transmission d'énergie sans contact au consommateur électrique disposé sur le rotor (20) et la détection de la position angulaire du rotor (20) au moyen du dispositif mis à disposition.

mittlere magnetische
Leitfähigkeit und
mittlere Induktivität

B

12

12B

hohe magnetische
Leitfähigkeit und hohe
Induktivität

22

24

23

12A

B'

12

12

10

20

**Fig. 1**

hohe magnetische Leitfähigkeit und hohe Induktivität

12

22

24

12A

12B

**Fig. 2B**

mittlere magnetische Leitfähigkeit und geringere Induktivität

24

12

22

12A  12B

**Fig. 2A**

geringe magnetische
Leitfähigkeit und
geringe Induktivität

mittlere magnetische
Leitfähigkeit und
mittlere Induktivität

12 12A B 12B

B'

23

24

22

12

A

12

10 20

Drehung

**Fig. 3**

Induktivität

Spule 1     Spule 2     Spule 3

180°

Winkel

# FIG. 4

**Fig. 5A**

Fig. 5B

Fig. 5C

Fig. 6A

Fig. 6B

Fig. 7

Fig. 8

**FIG. 9**

p=1 (Winkelbereich: 360°)

FIG. 10A

p=2 (Winkelbereich: 180°)

FIG. 10B

p=4 (Winkelbereich: 90°)

**FIG. 10C**

p=3 (Winkelbereich: 120°)

**FIG. 10D**

22

23

**FIG. 10E**

Dünn in z-Richtung

22

23

Dick in z-Richtung

**FIG. 10F**

13    11                    20

19

32

27

34

30

**FIG. 11A**

**FIG. 11B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 62261922 A
- DE 102007014661 A1
- DE 19946934 A1